# EUROPEAN PATENT APPLICATION

(11) **EP 1 562 137 A1**
(43) Date of publication of application: **10.08.2005**
(21) Application number: 04290297.3
(22) Date of filing: 04.02.2004
(51) Int. Cl.: G06K 9/22, G06F 9/44, G06F 3/033

(54) **Method for recognizing handwritings on a distributed computer system and corresponding client**

(71) Applicant: ALCATEL, 75008 Paris (FR)
(72) Inventor: Yilmaz, Hakan, 73265 Dettingen/Teck (DE)
(74) Representative: Brose, Gerhard, Dipl.-Ing.

(57) **Abstract**

A method is described for recognizing handwritings on a distributed computer system comprising at least one server and at least one client, wherein the client possesses at least one graphical input device allowing to capture handwritten data, and wherein the client can at least temporarily be connected with the server, and wherein
- the handwritten data is captured as a series of coordinates on the client side,
- the client transmits the coordinates to the server,
- the coordinates are converted into computer processable data on the server, and
- the data subsequently is transmitted back to the client from the server for further editing and/or output, plus
   a computer program product with sequences of code statements stored on a machine readable data medium to implement the method, if the computer program product is executed on a distributed computer system comprising at least one server and at least one client, and a
   a client for being used in a distributed computer system comprising at least one client and one server, possessing a graphical input device for entering handwritten data, the client
- capturing the handwritten data as a series of coordinates,
- being at least temporarily connectable with the server,
- transmitting the coordinates to the server, and
- receiving from the server computer processable data converted from the coordinates of the handwriting for being displayed and further edited.

## Description

### Technical field:

The invention relates to a method for recognizing handwritings on a distributed computer system comprising at least one server and at least one client, wherein the client possesses at least one graphical input device allowing to capture handwritten data, and wherein the client can at least temporarily be connected with the server, with
- the handwritten data being captured as a series of coordinates on the client side,
- the client transmitting the coordinates to the server,
- the coordinates being converted into computer processable data on the server, and
- the data subsequent being transmitted back to the client from the server for further editing and/or output,
plus
a computer program product with sequences of code statements stored on a machine readable data medium to implement the method, if the computer program product is executed on a distributed computer system comprising at least one server and at least one client,
and
a client for being used in a distributed computer system comprising at least one client and one server, possessing a graphical input device for entering handwritten data, the client
- capturing the handwritten data as a series of coordinates,
- being at least temporarily connectable with the server,
- transmitting the coordinates to the server, and
- receiving from the server computer processable data converted from the coordinates of the handwriting for being displayed and further edited.

### Background of the invention:

The invention relates to a method for recognizing handwritings on an electronic data processing device.

Like speech recognition, handwriting recognition is an additional input modality to the computer's keyboard. These input modalities are essential if input by a keyboard is not available or simply too awkward. Many mobile devices do not have a physical keyboard, but only a virtual keyboard, which has to be operated by pressing buttons on the screen with the pen. Also, many users are not skilled in the efficient usage of a keyboard. Therefore, handwriting recognition is a key technology for the development of mobile devices.
The basic functionality of an online handwriting recognizer is to convert the pen input, i.e. a sequence of x/y-coordinates into a recognition result in the form of computer processable data, i.e. in ASCII text, letters or symbols.
When we speak of handwriting recognition, we distinguish first between online and offline handwriting recognizers. An offline handwriting recognizer receives a digitized image like a bitmap or a gray-value picture as input. This image is obtained by scanning the image of the written text. A typical example is the recognition of ZIP codes on postal letters. In contrast, an online handwriting recognizer captures the input directly during the writing process, i.e. the movements of the pen are traced while the input is written. This is achieved by using touch-sensitive input pads or displays. Thus the input for an online handwriting recognizer is not a two-dimensional gray-value picture, but a sequence of coordinate points in time.
A further distinctive feature of handwriting recognizers refers to their adaptiveness to the writer. A writer dependent system is specialized on the handwriting of a particular writer. Naturally, this allows for higher recognition rates compared to those of writer independent systems, which must handle more variations of the writing style. Writer adaptive systems try to combine the advantages of both approaches: Starting with a writer independent system, the recognizer adapts to the writing style of a particular user.
The more natural the writing style, i.e. the less constraints are put on the writer, the more difficult the recognition. The following writing styles can be distinguished:
- boxed (characters are written in boxes or with significant distance between characters),
- printed (each character is written separately),
- cursive (letters are connected, i.e. a word is written in one or only a few strokes).

Typically, in boxed and printed style a different writing style for characters is used as in cursive writing.
The smallest writing unit is a single character or a symbol. A symbol can be as simple as a single straight stroke, or as complex as a personalized drawing. The next larger writing unit is a written word. The list of words which can be recognized is typically given by a vocabulary. Finally, an entire sentence or text can be recognized in one piece. Depending on the writing style, it is not always trivial to automatically segment a sentence into words, or a word into letters, especially if various alphabets, vocabularies and language models are applied.
The alphabet is the set of characters which can be recognized. Alphabets can consist of digits only, upper case letters, upper and lower case letters, or the full character set represented on a computer keyboard.
The vocabulary defines the list of words which can be recognized. Since the number of words in a vocabulary is limited, a recognition task will always encounter a certain percentage of words which are not in the vocabulary. These words are called 'new words' (see below). The larger a vocabulary, the higher the word coverage. On the other hand, a large vocabulary implies that more hypotheses must be compared (i.e. more computing resources are required) and that words within the vocabulary may be confused more easily (i.e. an additional source for potential recognition errors). Thus the design of a vocabulary is a compromise between a high word coverage and a good recognition performance.
Language models can be used to support the recognition of sentences and texts. Language models explore an additional source of knowledge by providing probability estimations of word sequences. The statistics for a language model are computed from large text corpora. Like the vocabulary, language models are typically task dependent.
If the recognizer encounters an unknown or ,new word' (i.e. a word not in the vocabulary), the word will be either identified as a word outside the vocabulary or erroneously recognized as another word in the vocabulary. In the first case, the word can either be rejected, or recognized as a ,new word', in which any character sequence is allowed.
Besides ,regular' words, proper names (last names, street or city names) are a typical example for ,new words'.

As can be seen from these explanations, a handwriting recognizer requires significantly more computing power compared to a keyboard. This constraint lowers the usefulness of applying handwriting recognizers in fields where handwritten input is supposed to bring about a higher usability and a considerable acceleration of the input process, i.e. primarily mobile applications, involving devices such as mobile phones, handhelds, PDAs, where a keyboard is not available, or in the case of on-site data input, e.g. on construction sites, at car inspections, and the like, where using a keyboard would be too time-consuming compared to handwritten input similar to making notes on a pad with a pencil.
In application fields where a handwriting recognizer is used in connection with a high computing power, normally the computing power is not fully utilized, i.e. computing power is wasted, which brings about unnecessary costs.

### Technical purpose of the invention:

The technical purpose of the invention is to develop a method for recognizing handwritings which can be used especially in connection with mobile electronic data processing devices that have low computing power, plus a pertinent computer program product and an electronic data processing device with minimum computing power requirements for being used in connection with handwriting recognition.

### Disclosure of the invention and its advantages:

The invention's technical purpose is fully met by the proposed method according to Claim 1, the proposed computer program product according to Claim 12, and the proposed client according to Claim 13.
The proposed method for recognizing handwritings on a distributed computer system comprising at least one server and at least one client with the specifying features of Claim 1 has the advantage over the state of the art that
- the handwritten data is captured as a series of coordinates on the client side
- the client transmits the coordinates to the server,
- the coordinates are converted on the server into computer processable data, such as for example numbers, letters, text, commands or symbols, and
- the data are subsequently transmitted back to the client from the server for further editing and/or output, so that on the client no computing-power intensive software for recognizing and converting the handwritten data is required. The client possesses at least one graphical input device, such as for example a graph tablet, a touch screen, or a scanner, that allows to capture the handwritten data, and the client can at least be temporarily connected with the server by means of, for example, a local wired or wireless network or a telephone connection. The data may remain available on the server too, for example as a backup or for user specific storage in a database in order to improve the recognition of the specific user's handwriting. The data may also be made available to other clients, for example for professional purposes such as time recording or procedure logging, or simply for distributing data to several users.

In a preferred embodiment of the invention, the handwritten data is displayed by means of reproduction of the captured coordinates in a graphical form as digital ink on the client's output device, wherein the data presentation on the display may happen synchronously or asynchronously.

In a preferred embodiment of the invention, the data exchange for transmitting the coordinates from the client to the server and for transmitting the data converted from the coordinates of the handwriting, for example text, letters, words, sentences or symbols, from the server to the client is based on a standardized format, such as XML, ASCII or CSV.

In a preferred embodiment of the invention, the client's graphical input device is identical with its output device, such as for example a touch screen, this device displaying at least temporarily a mask offering a field for entering handwritten data.

In another preferred embodiment of the invention, the mask is arbitrarily scaleable with regard to its dimensions, so that the method can be applied in connection with a mobile client, such as for example a mobile phone, a laptop or a PDA, the input/output device of which may have any size.

In another preferred embodiment of the invention, the mask is implemented as a servlet, so that the required storage space for the mask on the client is very little.

In another preferred embodiment of the invention, the mask is implemented as an applet, so that the mask is stored on the client only temporarily.

In an additional preferred embodiment of the invention, the mask is vector based. Unlike bitmapped interfaces that must send data for each pixel in a screen, vector based interfaces need only send the mathematical description of the interface. The result is much smaller files and faster transmission, especially when the mask is loaded in the case it is implemented as an applet. Another benefit is that vector graphics are scaleable much more easily to a variety of different form factors, whether for smaller monitors with constrained screen space on a desktop, or for new device formats that we have yet to consider, such as tablet PCs or PDAs.

In a particularly preferred embodiment of the invention, the mask is implemented in Flash. Flash provides efficient rendering through vector graphics. Furthermore Flash is platform independent. The core graphics-rendering engine in Flash, whether for full images, animations, or simple user interface controls, is a vector graphics-rendering engine. Since Flash supports XML data transfer, it is advantageous to use an application specific XML data transfer. Flash supports both HTTP based XML data transfer and XMLSocket real-time continuous connections.

In another particularly preferred embodiment of the invention, the entered handwriting at least allows user identification, especially when a client is registered at a server and/or prior to the use of a client. By means of the segmentation of the handwriting recognition into capturing of the entry's coordinates on the client and conversion of the coordinates into computer processable data on the server, the security on the client side can be increased, especially when handwriting recognition is used for validating a user's identity. By doing so, user specific data are not stored on the client and are therefore protected from third-party manipulation.

In another particularly preferred embodiment of the invention, the algorithm running on the server for converting the coordinates into computer processable data can be used by several clients at the same time.

Said computer program product with sequences of code statements with the specifying features of Claim 12 allows to implement said method, if the computer program product is executed on a distributed computer system comprising at least one server and at least one client.

Said client for being used in a distributed computer system comprising at least one client and one server with the specifying features of Claim 13 has the advantage over the state of the art that
- the handwritten data is captured as a series of coordinates,
- it is at least temporarily connectable with the server,
- it transmits the coordinates to the server, and
- it receives from the server computer processable data converted from the coordinates of the handwriting for being displayed and further edited.

Due to the fact that only the capturing of the coordinates of the handwritten data but not the conversion into computer processable data is done on the client, the computing-power demand on the client is strongly reduced, by which a reliable handwriting recognition, particularly a writer dependent handwriting recognition, on mobile clients that have limited computing power is rendered possible at all.

In a preferred embodiment of the invention, the handwritten data is displayed by means of reproduction of the captured coordinates in a graphical form as digital ink on the client's output device. By having the handwritten graphical data displayed on the output device, the user gets an immediate feedback on his input, by which the usability and user acceptance are clearly increased and error rates during data entry are clearly reduced.

In a preferred embodiment of the invention, the client captures the coordinates and transmits them to the server in a standardized data exchange format, such as XML, wherein the client is capable of reading out of a standardized data exchange format the data, such as for example text, letters, words etc., delivered by the server. Standardized data exchange formats have the advantage that they are usually taken into account when distributed networks, particularly wireless distributed networks, are set up and that they can be integrated in many software products with which client-server applications are developed.

In a preferred embodiment of the invention, the graphical input device is also an output device, e.g. touch screen, this device displaying at least temporarily a mask offering a field for entering handwritten data.

In another preferred embodiment of the invention, the mask is arbitrarily scaleable with regard to its dimensions.

In another preferred embodiment of the invention, the mask is implemented as a servlet.

In another preferred embodiment of the invention, the mask is implemented as an applet.

In another preferred embodiment of the invention, the mask is vector based.

In a particularly preferred embodiment of the invention, the mask is implemented in Flash.

In another particularly preferred embodiment of the invention, the entered handwriting is at least used for user identification and registration at the client and/or server.

### Brief description of the drawing, with

- Figure 1: showing various exemplary input modes of a handwriting recognizer,
- Figure 2: showing various possible handwritten symbols and their meaning after being converted into computer processable data, and
- Figure 3: showing a screenshot of a mask for entering handwritten data displayed on a combined input/output device of a mobile client.

### Paths for performing the invention:

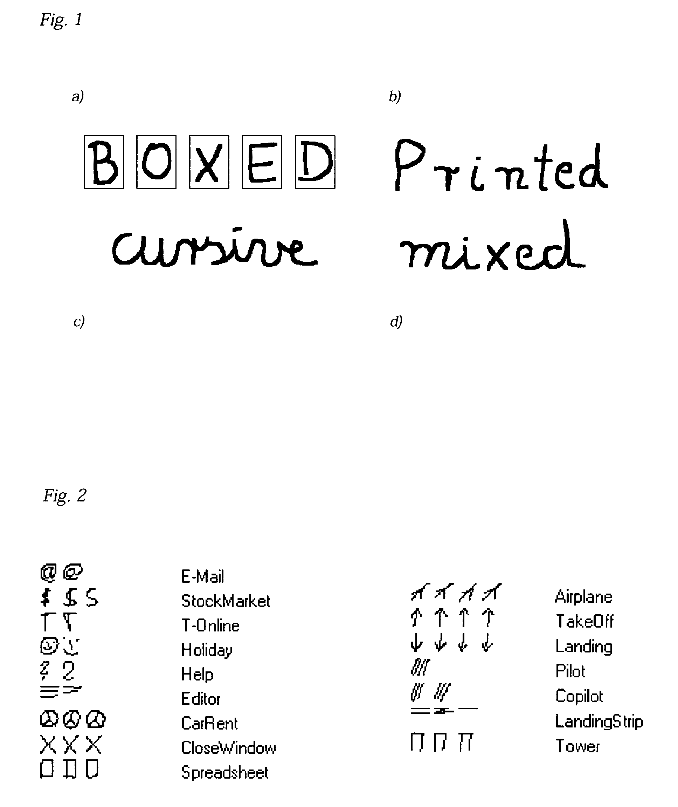

The handwriting recognition server is a writer independent online handwriting recognizer for single characters, words and symbols. The alphabet for single character recognition can be digits, upper case letters, or lower case and uppercase letters. For word recognition, the recognizer can be configured for printed or cursive words. As shown in Figure 1, handwriting input is possible in a) boxed, b) printed, c) cursive and d) mixed writing style.
For a recognition process, the coordinates of the handwritten entry are passed point by point to the handwriting recognizer on the server, just as they are provided by the input device of the client. Preprocessing of the coordinates by the client is not necessary. There are two recognition modes: In the explicit control mode, the application is in full control of all recognition actions. This means that the application decides when a recognition is to be started and terminated.
The automatic control mode implements a session concept. After a session is started, all points representing coordinates are passed to the recognizer on the server. The recognizer automatically segments the input stream and returns the recognition results using a call-back function.
When the handwriting recognizer is initialized, one or more configurations are loaded. The recognizer can be switched between configurations such as recognition of isolated digits and/or characters, words or sentences. While the configurations are 'hard-coded' into the system, the application can maintain its own set of vocabularies and language models.
Also symbol recognition is possible, wherein the architecture of the symbol recognizer is very similar to that of the text recognizer. Instead of a vocabulary, the symbol recognizer uses a symbol data base. While there is only one textual representation for each word in the vocabulary, there can be more than one representation of a symbol in the symbol data base. Each symbol which consists of one or more sample patterns has a unique name, which is retumed as recognition result if one of the patterns of the symbol is recognized.
An example of two small symbol data bases in Figure 2 shows a computer system interaction with user defined symbols and annotations for an air traffic control task.
For the realisation of the handwriting recognizer, Flash MX technology can be applied to implement the user interface for capturing (pen input) and presenting handwriting input (digital ink). XML can be used to transfer the pen input to the handwriting recognition server. The server can be realized by using the Java API for XML processing including XML parser (SAX).

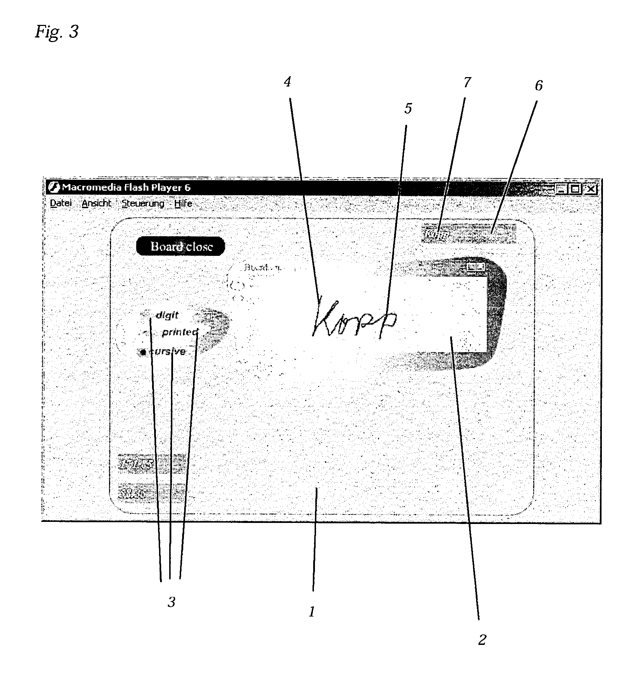

Figure 3 shows a screenshot of a mask 1 for entering handwritten data displayed on a combined input/output device of a mobile client, the mask offering an input field 2 for entering handwritten data. To the left of the input field 2, push buttons 3 are placed by which the recognizer can be switched between configurations such as recognition of isolated digits and/or characters, words or sentences. The coordinates of handwritten data 4 are captured in the input field 2 and displayed in the form of digital ink 5 on the combined input/output device simultaneously with the entry. An output field 6 displays the computer processable data 7 generated from the coordinates after conversion by the recognizer on the server and transmitted to the client.

### Commercial applicability:

The invention is commercially applicable particularly in the field of production of mobile clients, such as mobile phones, PDAs, handhelds or laptops, for being used in connection with handwritten input and the operation of networks with several mobile clients which may be utilized in connection with handwritten input.

## Claims

1. Method for recognizing handwritings on a distributed computer system comprising at least one server and at least one client, wherein the client possesses at least one graphical input device allowing to capture handwritten data, and wherein the client can at least temporarily be connected with the server, with
- the handwritten data being captured as a series of coordinates (4) on the client side,
- the client transmitting the coordinates (4) to the server,
- the coordinates (4) being converted into computer processable data (7) on the server, and
- the data (7) subsequently being transmitted back to the client from the server for further editing and/or output,

2. Method according to Claim 1, **characterized in that** the handwritten data (4) is displayed by means of reproduction of the captured coordinates (4) in a graphical form as digital ink (5) on the client's output device.

3. Method according to Claim 1 or 2, **characterized in that** the communication (coordinates, text, letters, words) between the client and the server is based on a standardized data exchange format.

4. Method according to Claim 1, 2 or 3, **characterized in that** the client's graphical input device is identical with its output device, this device displaying at least temporarily a mask (1) offering a field (2) for entering handwritten data.

5. Method according to Claim 4, **characterized in that** the mask (1) is arbitrarily scaleable with regard to its dimensions, so that the method can be applied in connection with a mobile client whose input/output device may have any size.

6. Method according to Claim 4 or 5, **characterized in that** the mask (1) is implemented as a servlet.

7. Method according to Claim 4 or 5, **characterized in that** the mask (1) is implemented as an applet.

8. Method according to one of the Claims 4 to 7, **characterized in that** the mask (1) is vector based.

9. Method according to Claim 8, **characterized in that** the mask (1) is implemented in Flash.

10. Method according to one of the previous Claims, **characterized in that** the entered handwriting (4) at least allows user identification.

11. Method according to one of the previous Claims, **characterized in that** the algorithm running on the server for converting the coordinates (4) into computer processable data (7) can be used by several clients at the same time.

12. Computer program product with sequences of code statements stored on a machine readable data medium to implement the method according to one of the Claims 1 to 11, if the computer program product is executed on a distributed computer system comprising at least one server and at least one client.

13. Client for being used in a distributed computer system that consists of at least one client and one server, comprising a graphical input device for entering handwritten data, **characterized in that**
- the handwritten data is captured as a series of coordinates,
- the client is at least temporarily connectable with the server,
- the client transmits the coordinates to the server, and
- the client receives from the server computer processable data converted from the coordinates of the handwriting for being displayed and further edited.

14. Client according to Claim 13, **characterized in that** the handwritten data is displayed by means of reproduction of the captured coordinates in a graphical form as digital ink on the client's output device.

15. Client according to Claim 13 or 14, **characterized in that** the client captures the coordinates and transmits them to the server in a standardized data exchange format, wherein the client is capable of reading out of a standardized data exchange format the data, such as for example text, letters, words etc., delivered by the server.

16. Client according to one of the Claims 13 to 15, **characterized in that** the graphical input device is also an output device, e.g. a touch screen, this device displaying at least temporarily a mask offering a field for entering handwritten data.

17. Client according to Claim 16, **characterized in that** the mask is arbitrarily scaleable with regard to its dimensions.

18. Client according to Claim 16 or 17, **characterized in that** the mask is implemented as a servlet.

19. Client according to Claim 16 or 17, **characterized in that** the mask is implemented as an applet.

20. Client according to one of the Claims 16 to 19, **characterized in that** the mask is vector based.

21. Client according to Claim 20, **characterized in that** the mask is implemented in Flash.

22. Client according to one of the Claims 13 to 21, **characterized in that** the entered handwriting at least allows user identification and registration at the client and/or server.
